# EUROPEAN PATENT APPLICATION

(11) **EP 2 610 527 A2**
(43) Date of publication of application: **03.07.2013**
(21) Application number: 12198136.9
(22) Date of filing: 19.12.2012
(51) Int. Cl.: F16H 57/04, F16H 1/28, F02K 3/06, F16H 57/08

(54) **Epicyclic gear train and turbine engine**

(30) Priority: 30.12.2011 US 201113340735
(71) Applicant: United Technologies Corporation, Hartford, CT 06101 (US)
(72) Inventor: McCune, Michael E., Colchester, CT Connecticut 06415 (US); Portlock, Lawrence E., Bethany, CT Connecticut 06524 (US); Schwarz, Frederick M., Glastonbury, CT Connecticut 06033 (US)
(74) Representative: Bridge, Kerry Ann

(57) **Abstract**

An epicyclic gear train, 22, includes a carrier, 26, that supports star gears, 32, that mesh with a sun gear, 30. A ring gear, 38, surrounds and meshes with the star gears, 32. Each of the star gears is supported on a respective journal bearing, 34. Each journal bearing includes an internal central cavity, 34a, and at least one passage, 37, that extends radially from the internal cavity to a peripheral journal surface of the respective journal bearing. The epicyclic gear train, 22, has a gear reduction ratio of greater than or equal to about 2.3.

## Description

### BACKGROUND OF THE INVENTION

This invention relates to a ring gear used in an epicyclic gear train of a gas turbine engine.

Gas turbine engines typically employ an epicyclic gear train connected to the turbine section of the engine, which is used to drive the turbo fan. In a typical epicyclic gear train, a sun gear receives rotational input from a turbine shaft through a compressor shaft. A carrier supports intermediate gears that surround and mesh with the sun gear. A ring gear surrounds and meshes with the intermediate gears. In arrangements in which the carrier is fixed against rotation, the intermediate gears are referred to as "star" gears and the ring gear is coupled to an output shaft that supports the turbo fan.

Typically, the ring gear is connected to the turbo fan shaft using a spline ring. The spline ring is secured to a flange of the turbo fan shaft using circumferentially arranged bolts. The spline ring includes splines opposite the flange that supports a splined outer circumferential surface of the ring gear. The ring gear typically includes first and second portions that provide teeth facing in opposite directions, which mesh with complimentary oppositely facing teeth of the star gears.

An epicyclic gear train must share the load between the gears within the system. As a result, the splined connection between the ring gear and spline ring is subject to wear under high loads and deflection. Since the spline connection requires radial clearance, it is difficult to get a repeatable balance of the turbo fan assembly. Balance can also deteriorate over time with spline wear.

### SUMMARY OF THE INVENTION

A disclosed example gear apparatus according to a non-limiting exemplary embodiment includes an epicyclic gear train including a carrier supporting star gears that mesh with a sun gear, and a ring gear surrounding and meshing with the star gears. Each of the star gears is supported on a respective journal bearing and each journal bearing includes an internal central cavity and at least one passage extending radially from the internal cavity to a peripheral journal surface of the respective journal bearing. The epicyclic gear train includes a gear reduction ratio of greater than or equal to about 2.3.

In a further embodiment of the foregoing gear apparatus the at least one passage includes a first passage and a second passage axially spaced from the first passage.

In a further embodiment of the foregoing gear apparatus the internal cavity extends between axial ends, and the first passage and the second passage are non-uniformly spaced with regard to the axial ends.

In a further embodiment of the foregoing gear apparatus the internal central cavity is axially blind.

In a further embodiment of the foregoing gear apparatus the epicyclic gear train has a gear reduction ratio of greater than or equal to 2.3.

In a further embodiment of the gear apparatus the epicyclic gear train has a gear reduction ratio of greater than or equal to about 2.5.

In a further embodiment of the foregoing gear apparatus, the epicyclic gear train has a gear reduction ratio of greater than or equal to 2.5.

A disclose example turbine engine according to another exemplary embodiment includes a turbine shaft, a fan, an epicyclic gear train coupled between the turbine shaft and the fan. The epicyclic gear train including a carrier supporting star gears that mesh with a sun gear, and a ring gear surrounding and meshing with the star gears. Each of the star gears being supported on a respective journal bearing and each journal bearing includes an internal central cavity and at least one passage extending radially from the internal cavity to a peripheral journal surface of the respective journal bearing. The epicyclic gear train defining a gear reduction ratio of greater than or equal to about 2.3.

In a further embodiment of the foregoing turbine engine the at least one passage includes a first passage and a second passage axially spaced from the first passage.

In a further embodiment of the foregoing turbine engine, the internal cavity extends between axial ends, and the first passage and the second passage are non-uniformly spaced with regard to the axial ends.

In a further embodiment of the foregoing turbine engine the internal central cavity is axially blind.

In a further embodiment of the foregoing turbine engine, the epicyclic gear train has a gear reduction ratio of greater than or equal to 2.3.

In a further embodiment of the foregoing turbine engine, the epicyclic gear train has a gear reduction ratio of greater than or equal to about 2.5.

In a further embodiment of the foregoing turbine engine, the epicyclic gear train has a gear reduction ratio of greater than or equal to 2.5.

In a further embodiment of the foregoing turbine engine the fan defines a bypass ratio of greater than about ten (10) with regard to a bypass airflow and a core airflow.

In a further embodiment of the foregoing turbine engine, the fan defines a bypass ratio of greater than about 10.5:1 with regard to a bypass airflow and a core airflow.

In a further embodiment of the foregoing turbine engine, the fan defines a bypass ratio of greater than ten (10) with regard to a bypass airflow and a core airflow.

In a further embodiment of the foregoing turbine engine, the fan has a pressure ratio that is less than about 1.45.

In a further embodiment of the foregoing turbine engine, the fan has a pressure ratio that is that is less than 1.45.

Although different examples have the specific components shown in the illustrations, embodiments of this invention are not limited to those particular combinations. It is possible to use some of the components or features from one of the examples in combination with features or components of another of the examples.

These and other features disclosed herein can be best understood from the following specification and drawings, the following of which is a brief description.

### BRIEF DESCRIPTION OF THE DRAWINGS

Figure 1 is a partial cross-sectional view of a front portion of a gas turbine engine illustrating a turbo fan, epicyclic gear train and a compressor section.
Figure 2 is an enlarged cross-sectional view of the epicyclic gear train shown in Figure 1.
Figure 3 is an enlarged cross-sectional view of an example ring gear similar to the arrangement shown in Figure 2.
Figure 4 is a view of the ring gear shown in Figure 3 viewed in a direction that faces the teeth of the ring gear in Figure 3.

### DETAILED DESCRIPTION

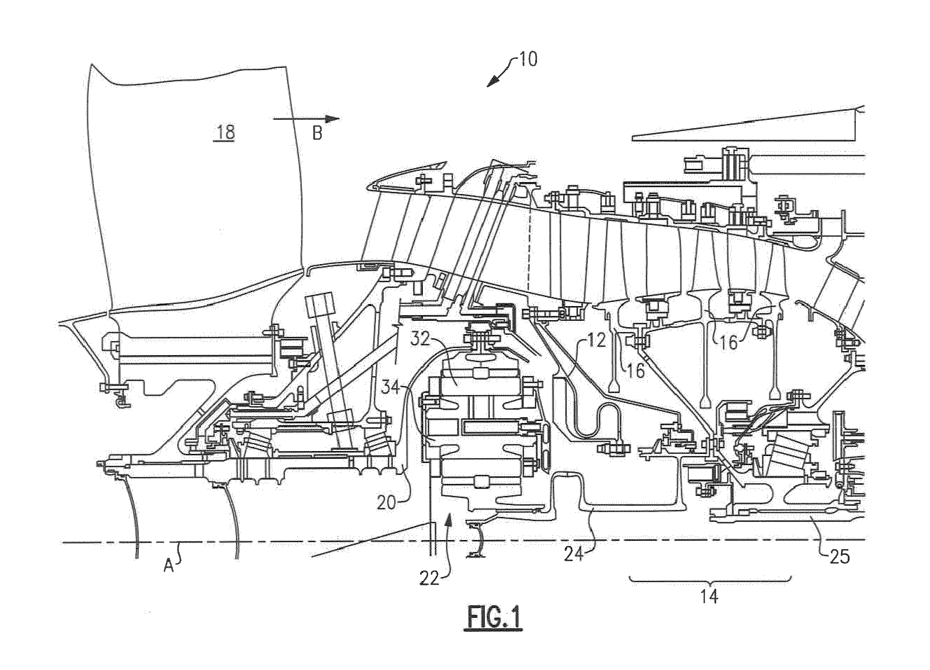

A portion of a gas turbine engine 10 is shown schematically in Figure 1. The turbine engine 10 includes a fixed housing 12 that is constructed from numerous pieces secured to one another. A compressor section 14 having compressor hubs 16 with blades are driven by a turbine shaft 25 about an axis A. A turbo fan 18 is supported on a turbo fan shaft 20 that is driven by a compressor shaft 24, which supports the compressor hubs 16, through an epicyclic gear train 22.

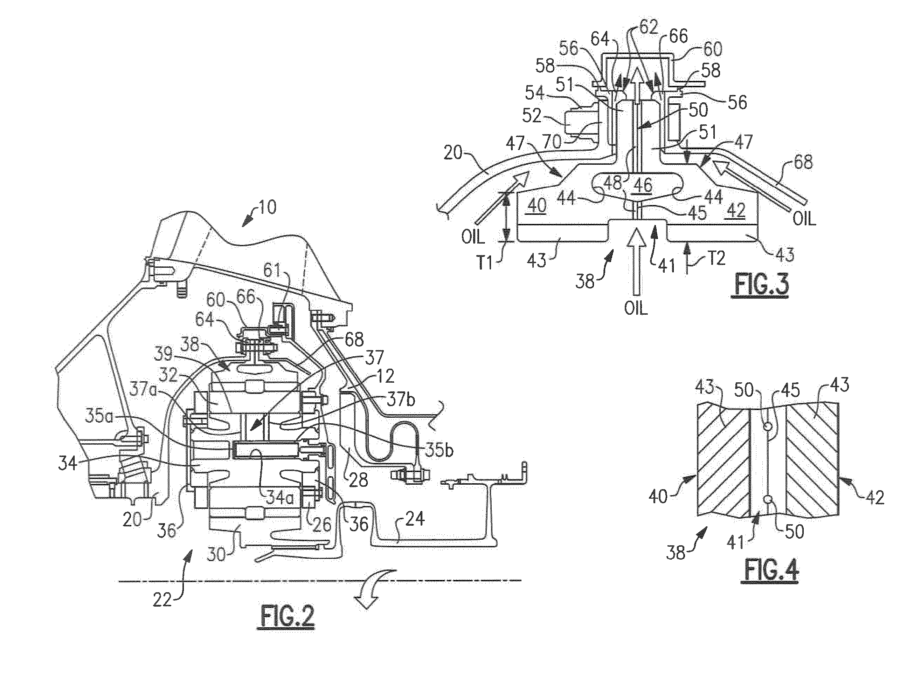

In the example arrangement shown, the epicyclic gear train 22 is a star gear train, Referring to Figure 2, the epicyclic gear train 22 includes a sun gear 30 that is connected to the compressor shaft 24, which provides rotational input, by a splined connection. A carrier 26 is fixed to the housing 12 by a torque frame 28 using fingers (not shown) known in the art. The carrier 26 supports star gears 32 using journal bearings 34 that are coupled to the sun gear 30 by meshed interfaces between the teeth of sun and star gears 30, 32. Multiple star gears 32 are arranged circumferentially about the sun gear 30. Retainers 36 retain the journal bearings 34 to the carrier 26. A ring gear 38 surrounds the carrier 26 and is coupled to the star gears 32 by meshed interfaces. The ring gear 38, which provides rotational output, is secured to the turbo fan shaft 20 by circumferentially arranged fastening elements, which are described in more detail below.

As shown, each of the star gears 32 is supported on one of the journal earings 34. Each journal bearing 34 has an internal central cavity 34a that extends between axial ends 35a and 35b. In this example, as shown, the internal central cavity 34a is axially blind in that the axial end 35a is closed. At least one passage 37 extends from the internal central cavity 34a to a peripheral journal surface 39. In the example, the at least one passage 37 includes a first passage 37a and a second passage 37b that is axially spaced form the first passage 37a. As shown, the first and second passages 37a and 37a are non-uniformly spaced with regard to the axial ends 35a and 35b of the internal central cavity 34a.

In operation, lubricant is provided to the internal central cavity 34a. The lubricant flows through the internal central cavity 34a and then outwardly through the at least one passage 37 to the peripheral journal surface 39. The arrangement of the internal central cavity 34a and at least one passage 37 thereby serves to cool and lubricate the journal bearing 32.

The gas turbine engine 10 is a high-bypass geared architecture aircraft engine. In one disclosed, non-limiting embodiment, the engine 10 has a bypass ratio that is greater than about six (6) to ten (10), the epicyclic gear train 22 is a planetary gear system or other gear system with a gear reduction ratio of greater than about 2.3 or greater than about 2.5, and a low pressure turbine of the engine 10 has a pressure ratio that is greater than about 5. In one disclosed embodiment, the engine 10 bypass ratio is greater than about ten (10:1) or greater than about 10.5:1, the turbofan 18 diameter is significantly larger than that of the low pressure compressor of the compressor section 14, and the low pressure turbine has a pressure ratio that is greater than about 5:1. In one example, the epicyclic gear train 22 has a gear reduction ratio of greater than about 2.3:1 or greater than about 2.5:1. It should be understood, however, that the above parameters are only exemplary of one embodiment of a geared architecture engine and that the present invention is applicable to other gas turbine engines including direct drive turbofans.

A significant amount of thrust is provided by a bypass flow B due to the high bypass ratio. The fan 18 of the engine 10 is designed for a particular flight condition -- typically cruise at about 0,8M and about 35,000 feet. The flight condition of 0.8 M and 35,000 ft, with the engine at its best fuel consumption - also known as "bucket cruise TSFC" - is the industry standard parameter of 1bm of fuel being burned divided by lbf of thrust the engine produces at that minimum point. "Low fan pressure ratio" is the pressure ratio across the fan blade alone. The low fan pressure ratio as disclosed herein according to one non-limiting embodiment is less than about 1.45. "Low corrected fan tip speed" is the actual fan tip speed in ft/see divided by an industry standard temperature correction of [(Tambient deg R) / 518.7)^0.5]. The "Low corrected fan tip speed" as disclosed herein according to one non-limiting embodiment is less than about 1150 ft / second.

Referring to Figures 3 and 4, the ring gear 38 is a two-piece construction having first and second portions 40, 42. The first and second portions 40, 42 abut one another at a radial interface 45. A trough 41 separates oppositely angled teeth 43 (best shown in Figure 4) on each of the first and second portions 40, 42. The arrangement of teeth 43 forces the first and second portions 40, 42 toward one another at the radial interface 45. The back side of the first and second portions 40, 42 includes a generally S-shaped outer circumferential surface 47 that, coupled with a change in thickness, provides structural rigidity and resistance to overturning moments. The first and second portions 40, 42 have a first thickness T1 that is less than a second thickness T2 arranged axially inwardly from the first thickness T1. The first and second portions 40, 42 include facing recesses 44 that form an internal annular cavity 46.

The first and second portions 40, 42 include flanges 51 that extend radially outward away from the teeth 43. The turbo fan shaft 20 includes a radially outwardly extending flange 70 that is secured to the flanges 51 by circumferentially arranged bolts 52 and nuts 54, which axially constrain and affix the turbo fan shaft 20 and ring gear 38 relative to one another. Thus, the spline ring is eliminated, which also reduces heat generated from windage and churning that resulted from the sharp edges and surface area of the splines. The turbo fan shaft 20 and ring gear 38 can be rotationally balanced with one another since radial movement resulting from the use of splines is eliminated. An oil baffle 68 is also secured to the flanges 51, 70 and balanced with the assembly.

Seals 56 having knife edges 58 are secured to the flanges 51, 70. The first and second portions 40, 42 have grooves 48 at the radial interface 45 that form a hole 50, which expels oil through the ring gear 38 to a gutter 60 that is secured to the carrier 26 with fasteners 61 (Figure 2). The direct radial ow path provided by the grooves 48 reduces windage and churning by avoiding the axial flow path change that existed with splines. That is, the oil had to flow radially and then axially to exit through the spline interface. The gutter 60 is constructed from a soft material such as aluminum so that the knife edges 58, which are constructed from steel, can cut into the aluminum if they interfere. Referring to Figure 3, the seals 56 also include oil return passages 62 provide by first and second slots 64 in the seals 56, which permit oil on either side of the ring gear 38 to drain into the gutter 60. In the example shown in Figure 2, the first and second slots 64, 66 are instead provided in the flange 70 and oil baffle 68, respectively.

Although embodiments of this invention have been disclosed, a worker of ordinary skill in this art would recognize that certain modifications would come within the scope of this invention. For that reason, the following claims should be studied to determine the true scope and content of this invention.

## Claims

1. A gear apparatus, comprising:
an epicyclic gear train (22) including a carrier (26) supporting star gears (32) that mesh with a sun gear (30), and a ring gear (38) surrounding and meshing with the star gears (32), each of the star gears being supported on a respective journal bearing (34), each journal bearing including an internal central cavity (34a) and at least one passage (37) extending radially from the internal cavity to a peripheral journal surface of the respective journal bearing, wherein the epicyclic gear train has a gear reduction ratio of greater than or equal to about 2.3.

2. The gear apparatus as recited in claim 1, wherein the at least one passage (37) includes a first passage (37a) and a second passage (37b) axially spaced from the first passage (37a).

3. The gear apparatus as recited in claim 2, wherein the internal cavity (34a) extends between axial ends, and the first passage (37a) and the second passage (37b) are non-uniformly spaced with regard to the axial ends.

4. The gear apparatus as recited in claim 1, wherein the internal central cavity (34a) is axially blind.

5. The gear apparatus as recited in claim 1, wherein the epicyclic gear train (22) has a gear reduction ratio of greater than or equal to 2.3.

6. The gear apparatus as recited in claim 1, wherein the epicyclic gear drain (22) has a gear reduction ratio of greater than or equal to about 2.5, and preferably wherein the epicyclic gear train has a gear reduction ratio of greater than or equal to 2.5.

7. A turbine engine (10) comprising:
a turbine shaft (25);
a fan (18); and
an epicyclic gear train (22) coupled between the turbine shaft and the fan (18), the epicyclic gear train including a carrier (26) supporting star gears (32) that mesh with a sun gear (30), and a ring gear (38) surrounding and meshing with the star gears (32), each of the star gears being supported on a respective journal bearing (34), each journal bearing including an internal central cavity (34a) and at least one passage (37) extending radially from the internal cavity to a peripheral journal surface of the respective journal bearing, wherein the epicyclic gear train defines a gear reduction ratio of greater than or equal to about 2.3.

8. The turbine engine as recited in claim 7, wherein the at least one passage (37) includes a first passage (37a) and a second passage (37b) axially spaced from the first passage.

9. The turbine engine as recited in claim 8, wherein the internal cavity (34a) extends between axial ends, and the first passage (37a) and the second passage (37b) are non-uniformly spaced with regard to the axial ends.

10. The turbine engine as recited in claim 7, wherein the internal central cavity (34a) is axially blind.

11. The turbine engine as recited in claim 7, wherein the epicyclic gear train (22) has a gear reduction ratio of greater than or equal to 2.3.

12. The turbine engine as recited in claim 7, wherein the epicyclic gear drain (22) has a gear reduction ratio of greater than or equal to about 2.5, and preferably wherein the epicyclic gear train has a gear reduction ratio of greater than or equal to 2.5.

13. The turbine engine as recited in claim 7, wherein the fan (18) defines a bypass ratio of greater than about ten (10) with regard to a bypass airflow and a core airflow, and preferably wherein the fan defines a bypass ratio of greater than ten (10) with regard to a bypass airflow and a core airflow.

14. The turbine engine as recited in claim 7, wherein the fan (18) defines a bypass ratio of greater than about 10.5:1 with regard to a bypass airflow and a core airflow,

15. The turbine engine as recited in claim 7, wherein the fan (18) has a pressure ratio that is less than about 1.45, and preferably wherein the fan has a pressure ratio that is less than 1.45.
